# EUROPEAN PATENT APPLICATION

(11) **EP 2 523 483 A1**
(43) Date of publication of application: **14.11.2012**
(21) Application number: 10841896.3
(22) Date of filing: 11.01.2010
(51) Int. Cl.: H04W 8/02

(54) **METHOD, DEVICE AND SYSTEM FOR IMPLEMENTING RESOURCE SUSPENSION**

(71) Applicant: Huawei Technologies Co., Ltd., Shenzhen, Guangdong 518129 (CN)
(72) Inventor: CHEN, Zhongping, Shenzhen Guangdong 518129 (CN); YU, Yijun, Shenzhen Guangdong 518129 (CN)
(74) Representative: Körber, Martin Hans
(86) International application number: PCT/CN2010/070118
(87) International publication number: WO 2011/082552

(57) **Abstract**

A method, an apparatus and a system for implementing resource suspension are provided in the embodiment of the present invention, which relate to the field of communications technologies, and are invented for saving system resources. The method includes: receiving a service request message sent by an evolved universal mobile telecommunications system territorial radio access network node eNodeB, in which the service request message includes circuit domain service fallback conventional network indication information; according to the circuit domain service fallback conventional network indication information included in the service request message, triggering an operation of enabling a user equipment to return to a target network to perform a voice service; and if a packet service of the user equipment in a source network is unable to be handed over to the target network, setting the user equipment to a suspended state in the source network.

## Description

**FIELD OF THE INVENTION** The present invention relates to the field of communications technologies, and in particular, to a method, an apparatus and a system for implementing resource suspension.

### BACKGROUND OF THE INVENTION

Existing 2G (2nd Generation, 2nd Generation) and 3G (3rd Generation, 3rd Generation) communication networks generally include two parts: a radio access network (Radio Access Network, RAN) and a core network (Core Network, CN). The core network logically may be divided into a circuit switched domain (Circuit Switched Domain, CS) mainly processing a voice service and a packet switched domain (Packet Switched Domain, PS) mainly processing a packet service.

In a conventional 2G/3G network, a voice service provided by an operator mostly runs in a circuit switched domain. However, in order to reuse an existing voice service in a subsequent evolved packet system (evolved packet system, EPS), the industry proposes a method in which a conventional CS network is connected through an EPS network, that is, a CS service fallback conventional network (CS fallback, CSFB) technology. Meanwhile, with the development of communications technologies, the industry further proposes a single radio voice call continuity (Single Radio Voice Call Continuity, SRVCC) technology, which is mainly used for handing over a voice service that is being performed in the evolved network to the conventional CS network in a scenario that network handover occurs in a terminal, such as handover from an evolved UMTS territorial radio access network (Evolved UMTS Territorial Radio Access Network, E-UTRAN) to a conventional radio access network (GSM EDGE Radio Access Network GSM EDGE, GERAN)/UMTS territorial radio access network (UMTS Territorial Radio Access Network, UTRAN), that is, for completing handover from a PS network voice service to a CS network voice service.

In the CSFB technology or SRVCC technology, a user equipment (User Equipment, UE) needs to return from an E-UTRAN network to a GERAN/UTRAN network, selects a cell of the GERAN/UTRAN network to perform camping, and then performs a voice service through the conventional CS network.

In the procedure that the UE returns from a source network (E-UTRAN) to a target network (GERAN/UTRAN), and particularly in a case that the target network neither supports PS HO (PS Handover, PS handover) nor supports a DTM (Dual Transfer Mode, dual transfer mode), while the UE is executing a voice service in the target network, packet services of the source network is unable to be handed over to a packet switched domain of the target network, and continues to be reserved in the source network. For these packet services reserved in the source network, if being paged occurs, and since a corresponding UE camps in the target network, a case that the paging is unreachable will occur, thereby causing system resource waste.

### SUMMARY OF THE INVENTION

Embodiments of the present invention provide a method, an apparatus and a system for implementing resource suspension, so as to save system resources.

The embodiments of the present invention adopt the following technical solutions.

A method for implementing resource suspension includes:
receiving a service request message sent by an evolved universal mobile telecommunications system territorial radio access network node eNodeB, in which the service request message includes circuit domain service fallback conventional network indication information;
according to the circuit domain service fallback conventional network indication information included in the service request message, triggering an operation of enabling a user equipment to return to a target network to perform a voice service; and
if a packet service of the user equipment in a source network is unable to be handed over to the target network, setting the user equipment to a suspended state in the source network.

A method for implementing resource suspension includes:
receiving a handover request message sent by an eNodeB, in which the handover request message includes single radio voice call continuity indication information;
according to the single radio voice call continuity indication information included in the handover request message, executing an operation of handing over a voice-related packet service of a user equipment to a target network; and
if a voice-unrelated packet service of the user equipment is unable to be handed over to the target network, setting the user equipment to a suspended state in a source network.

An apparatus for implementing resource suspension includes:
a message receiving unit, configured to receive a service request message sent by an evolved universal mobile telecommunications system territorial radio access network node eNodeB, in which the service request message includes circuit domain service fallback conventional network indication information;
a triggering unit, configured to trigger, according to the circuit domain service fallback conventional network indication information included in the service request message, an operation of enabling a user equipment to return to a target network to perform a voice service; and
an operation unit, configured to, if a packet service of the user equipment in a source network is unable to be handed over to the target network, set the user equipment to a suspended state in the source network.

An apparatus for implementing resource suspension includes:
a message receiving unit, configured to receive a handover request message sent by an eNodeB, in which the handover request message includes single radio voice call continuity indication information;
a triggering unit, configured to execute, according to the single radio voice call continuity indication information included in the handover request message, an operation of handing over a voice-related packet service of a user equipment to a target network; and
an operation unit, configured to, if a voice-unrelated packet service of the user equipment is unable to be handed over to the target network, set the user equipment to a suspended state in a source network.

A system for implementing resource suspension includes any one of the foregoing apparatuses for implementing resource suspension.

With a method, an apparatus and a system for implementing resource suspension according to embodiments of the present invention, when a packet service of a user equipment in a source network is unable to be handed over to a target network or a voice-unrelated packet service is unable to be handed over to the target network, a user equipment is set to a suspended state. When being paged occurs, since a corresponding user equipment has been in the suspended state, downlink paging is not triggered for the user equipment, thereby avoiding enormous paging generated in a case that the user equipment is unreachable in the prior art, so as to save system resources.

### BRIEF DESCRIPTION OF THE DRAWINGS

To illustrate the technical solutions according to the embodiments of the present invention more clearly, the accompanying drawings required for describing the embodiments are introduced below briefly. Apparently, the accompanying drawings in the following description merely show some embodiments of the present invention, and persons of ordinary skill in the art can obtain other drawings according to the accompanying drawings without creative efforts.
FIG. 1 is a flowchart of a method for implementing resource suspension according to Embodiment 2 of the present invention;
FIG. 2 is a flowchart of a method for implementing resource suspension according to Embodiment 3 of the present invention;
FIG. 3 is a flowchart of a method for implementing resource suspension according to Embodiment 5 of the present invention;
FIG. 4 is a flowchart of a method for implementing resource suspension according to Embodiment 6 of the present invention;
FIG. 5 is a schematic diagram of an apparatus for implementing resource suspension according to Embodiment 7 of the present invention;
FIG. 6 is a structural diagram of an apparatus for implementing resource suspension according to Embodiment 7 of the present invention;
FIG. 7 is a schematic diagram of an apparatus for implementing resource suspension according to Embodiment 8 of the present invention; and
FIG. 8 is a structural diagram of an apparatus for implementing resource suspension according to Embodiment 8 of the present invention.

### DETAILED DESCRIPTION OF THE EMBODIMENTS

The technical solutions of the embodiments of the present invention will be clearly described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

In order to save system resources, Embodiment 1 of the present invention provides a method for implementing resource suspension. According to a technical solution of Embodiment 1 of the present invention, in a source network, a mobility management entity (Mobility Management Entity, MME) receives a service request message of a user equipment sent by an evolved universal mobile telecommunications system territorial radio access network node (E-UTRAN Node B, eNodeB), and carries circuit domain service fallback conventional network indication information (CS Fallback Indicator) in the message, and then according to the circuit domain service fallback conventional network indication information included in the service request message, triggers an operation of enabling the user equipment to return to a target network to perform a voice service; if a packet service of the user equipment in the source network is unable to be handed over to the target network, sets the user equipment to a suspended state in the source network; otherwise, executes a corresponding handover operation.

That is to say, according to the technical solution of Embodiment 1 of the present invention, the user equipment whose packet service is unable to be handed over to the target network is set to the suspended state in the source network. Therefore, by use of the method according to Embodiment 1 of the present invention, in the source network, when being paged occurs, since a corresponding user equipment has been in the suspended state, downlink paging is not triggered for the user equipment, thereby avoiding enormous paging generated in a case that the user equipment is unreachable in the prior art, so as to save system resources.

In the embodiment of the present invention, the source network includes an E-UTRAN network, and the target network includes a GERAN/UTRAN network. In the following, how to implement resource suspension in a CSFB technology is described with reference to Embodiment 2 and Embodiment 3.

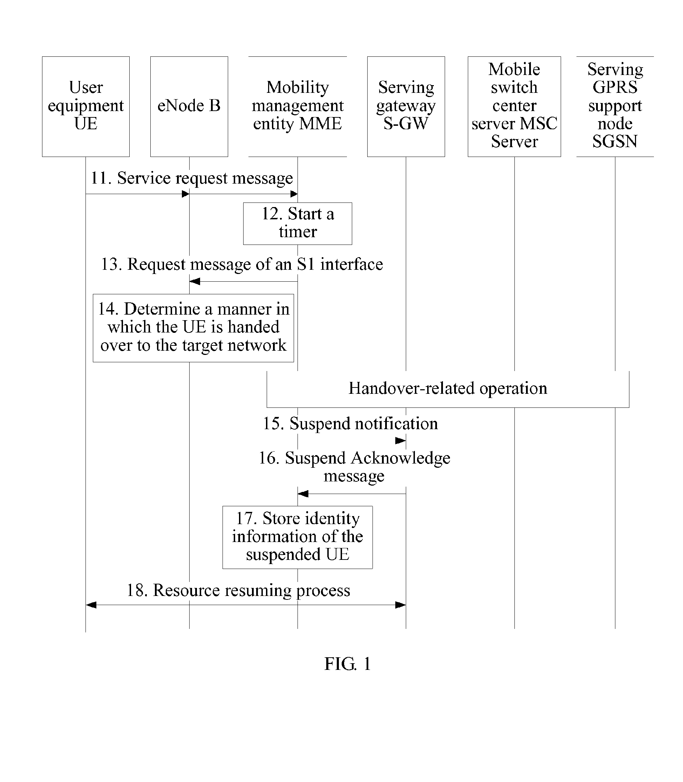

As shown in FIG. 1, a method for implementing resource suspension according to Embodiment 2 of the present invention includes the following steps.

Step 11: When a UE actively initiates a voice session (Mobile Originating call) or receives voice-based called paging (Mobile Terminating Call) sent by a network side, the UE sends an access request message to an MME of a source network through an eNodeB, such as a service request message (Service Request), and the message carries CSFB indication information (CS Fallback Indicator).

Through the CSFB indication information, the MME may learn that the UE will execute a CSFB operation and return to the GERAN/UTRAN network, that is, the UE needs to perform a network handover operation.

Step 12: After the MME of the source network receives the service request message, if the message carries the CSFB indication information (CS Fallback Indicator), the MME starts a timer.

The timer is used to trigger a resource suspension process between the MME and an S-GW (Serving Gateway, serving gateway) in the target network.

The duration of the timer may be randomly set, which at least needs to ensure that within the duration, the UE can be handed over to the target network and completes an RAU (Routing Area Update, routing area update) process. The description is the same as that in the following embodiments.

Step 13: After receiving the service request message, the MME of the source network sends a request message of an S 1 interface (S 1 -AP Request, an application protocol request message on the S1 interface) to the eNodeB, in which the message includes the CSFB indication information which is used to instruct the eNodeB to perform the CSFB operation and to hand over the UE to the GERAN/UTRAN network.

The S1 interface is an interface between the MME and the eNodeB, and a connection between them may be referred to as an S1 association. In a specific implementation procedure, the S1 -AP Request may be an INITIAL CONTEXT SETUP REQUEST (initial context setup request message), or further may be a UE CONTEXT MODIFICATION REQUEST (UE context modification request message).

Step 14: According to an obtained measurement report (measurement report) of the UE, the eNodeB decides which manner is adopted to hand over (or be referred to as redirection (redirection)) the UE from the source network to the target network. The measurement report may be what the eNodeB solicits (solicit) the UE to report. According to different manners adopted by the eNodeB, a processing manner in the embodiment of the present invention may include the following.
1) When it is determined, according to the measurement report of the UE, that a PS HO manner is adopted to hand over the UE from the source network to the target network, the eNodeB will trigger a PS HO process. In this case, the eNodeB sends a handover request message to the MME, to instruct the MME to execute the PS HO process. By executing the PS HO process, the UE may be handed over from the source network to the target network, and meanwhile the packet service of the source network may be handed over to the packet domain of the target network.

In the PS HO process, an SGSN (Serving GPRS Support Node, serving GPRS support node) of the target network obtains a context of the UE from the MME of the source network, in which the context of the UE may include UE-related packet service information. According to the context of the UE, the SGSN of the target network initiates an update process to a gateway (S-GW or P-GW), and then a UE-related packet service may be handed over from the source network to the target network.

Additionally, in this procedure, the SGSN of the target network sends a forward relocation response (Forward Relocation Response) message to the MME, which is used to acknowledge that in a preparation phase (Preparation phase) of an entire handover process, the context of the UE has been obtained from the MME, and then the SGSN of the target network sends a forward relocation complete notification (Forward Relocation Complete Notification) message to the MME, which is used to acknowledge that in an execution phase (Execution phase) of the entire handover process, the handover has been successfully completed.

In the procedure, after receiving the forward relocation response or forward relocation complete notification message sent by the SGSN of the target network, the MME may stop the timer.
2) When the eNodeB is incapable of adopting the PS HO manner to hand over the UE from the source network to the target network, for example, the target network does not support PS HO, the eNodeB does not trigger the PS HO process.

In this case, according to the acquired measurement report, the eNodeB acknowledges that the UE and the target network support an inter-RAT cell change order (inter-RAT cell change order), and then the eNodeB may hand over (or be referred to as redirection) the UE from the source network to the target network in a manner of triggering NACC (NETWORK ASSISTED CELL CHANGE, network assisted cell change). if according to the acquired measurement report, the eNodeB acknowledges that the UE and the target network do not support the inter-RAT cell change order (inter-RAT cell change order), the eNodeB triggers an RRC connection release (RRC connection release) process to hand over or redirect the UE from the source network to the target network.

After the UE is handed over to the target network, if the target network supports a DTM, the UE may initiate an RAU process while performing a voice service in the target network, so as to hand over a related packet service from the source network to the target network.

A specific procedure may be: In the RAU process, the SGSN of the target network sends a context request message (Context Request) to the MME, which is used to request the context of the UE from the MME, and then the MME sends the context of the UE to the SGSN of the target network according to the request. After receiving the context of the UE, the SGSN sends a context acknowledgement message (Context Ack) to the MME of the source network, which is used to acknowledge that the context of the UE transferred by the MME has been received. After receiving the context of the UE, the SGSN of the target network initiates an update process to a gateway (S-GW or P-GW), and then the UE-related packet service may be moved from the source network to the target network.

In the procedure, after receiving the context request message or context acknowledgement message sent by the SGSN of the target network, the MME may stop the timer.
3) When the eNodeB is incapable of adopting the PS HO manner to hand over the UE from the source network to the target network, for example, the target network does not support PS HO, the eNodeB may not trigger the PS HO process.

In this case, according to the acquired measurement report, the eNodeB acknowledges that the UE and the target network support an inter-RAT cell change order (inter-RAT cell change order), and then the eNodeB may hand over (or be referred to as redirection) the UE from the source network to the target network in a manner of triggering NACC (NETWORK ASSISTED CELL CHANGE, network assisted cell change). If the UE and the target network do not support the inter-RAT cell change order (inter-RAT cell change order), the eNodeB triggers an RRC connection release (RRC connection release) process to hand over or redirect the UE from the source network to the target network.

However, after the UE is handed over to the target network, if the target network does not support the DTM, the UE may not initiate the RAU process while performing the voice service in the target network. Therefore, within the predetermined time of the timer, the MME may not receive any one of messages sent by the SGSN of the target network in the foregoing case 1) and case 2). Then, the timer is timed out, that is, within the allowed time range of the timer, the context of the UE is not handed over to the target network. That is, within the allowed time range of the timer, the packet service of the source network is not handed over to the target network. In this way, a resource suspension process is triggered.

Step 15: When the timer of the MME of the source network is timed out, a suspension process between the MME of the source network and the S-GW (Serving Gateway, serving gateway) of the target network may be triggered, that is, in the source network, the UE is set to the suspended state.

A specific procedure may be: The MME of the source network sends a suspend notification (Suspend Notification) to the S-GW of the target network, and the notification carries identity information such as an IMSI (international mobile subscriber identity, international mobile subscriber identity) of the user equipment on which a suspension operation needs to be performed, so that a serving GPRS support node of the target network suspends the corresponding user equipment.

Step 16: The S-GW sends a suspend acknowledge message (Suspend Acknowledge) to the MME.

Additionally, a bearer operation that is related to a packet service may be further performed between the MME and S-GW, for example, a non-GBR bearer is reserved, and a GBR bearer is deactivated.

Step 17: The MME of the source network stores identity information of the user equipment. In a specific procedure, the identity information of the user equipment may be stored in a table of a correspondence relation between the identity information of the user equipment and state information of the user equipment, and the state information corresponding to the identity information is set to a suspended state.

Step 18: When the user equipment returns to the source network, the MME of the source network obtains the identity information of the user equipment. When it is determined according to the identity information and the stored identity information that the user equipment is in a suspended state, packet service resources of the user equipment are resumed.

A specific procedure may be: The UE sends an NAS (Non Access Stratum, non access stratum) message to the MME, such as a Service Request, or a TAU Request (Tracking Area Update Request, tracking area update request). Then, the MME of the source network searches for the table of the correspondence relation according to the identity information obtained by the UE, and when it is determined that the user equipment is in the suspended state, a resume message (Resume Notification) is sent to the S-GW of the target network, to instruct the S-GW to resume the UE to a normal state, that is, a state capable of receiving called paging. Then, the S-GW sends a resume acknowledgement (Resume Acknowledge) message to the MME of the source network. The S-GW and the MME clear the suspended state of the UE.

In Embodiment 2 of the present invention, for a CSFB technology, after the MME receives the service request message sent by the UE, if the message carries CSFB indication information, the MME starts the timer. Therefore, by use of the method according to Embodiment 2 of the present invention, the user equipment incapable of handing over the packet service to the target network can be correctly set to the suspended state, thereby not only improving the correctness of a suspension operation but also saving system resources.

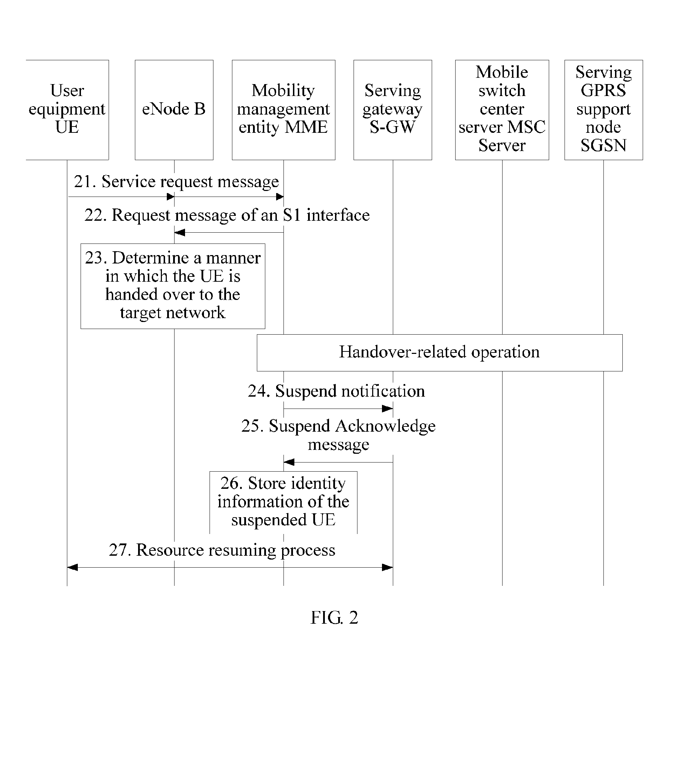

As shown in FIG. 2, a method for implementing resource suspension according to Embodiment 3 of the present invention includes the following steps.

Step 21: Be the same as Step 11.

Step 22: Be the same as Step 13.

Step 23: According to an obtained measurement report (measurement report) of the UE, the eNodeB decides which manner is adopted to hand over or redirect (redirection) the UE from the source network to the target network. The measurement report may be what the eNodeB solicits (solicit) the UE to report. According to different manners adopted by the eNodeB, the processing manner in the embodiment of the present invention may include the following.
1) When the eNodeB adopts a PS HO manner to move the UE from the source network to the target network, the eNodeB will trigger the PS HO process. Then, the eNodeB sends it to the MME, to instruct the MME to execute the PS HO process. By executing the PS HO process, the UE may be moved from the source network to the target network, and meanwhile the packet service of the source network may be handed over to the packet domain of the target network. Except for timer-related operations, the description of other processing procedures is the same as the description of the manner 1) in step 14.
2) When the eNodeB is incapable of adopting the PS HO manner to hand over the UE from the source network to the target network, for example, the target network does not support PS HO, the eNodeB may not trigger the PS HO process. In this case, the following several processing manners may be adopted in this embodiment.

Manner 1: The eNodeB sends a UE context release request (UE Context Release Request) to the MME of the source network, and the request carries information indicating whether a packet service is available. if the message carries information indicating that no packet service is available, it is determined that the context of the UE is unable to be transferred from the source network to the target network, that is, the packet service of the source network is unable to be handed over to the target network, and otherwise, the packet service of the source network can be handed over to the target network. When it is determined that the packet service of the source network is unable to be handed over to the target network, a resource suspension process may be triggered.

Manner 2: The eNodeB sends the UE context release request (UE Context Release Request) to the MME of the source network. Then, the MME executes an S1 connection release (S1 release) operation, receives a user equipment context release complete message (UE Context Release Complete) sent by the eNodeB or receives a release access bearer response message (Release Access Bearers Response) sent by the S-GW of the target network.

If the UE context release request carries information indicating whether a packet service is available, and if the information is information indicating that no packet service is available, it is determined that the context of the UE is unable to be transferred from the source network to the target network, that is, the packet service of the source network is unable to be handed over to the target network; and otherwise, the packet service of the source network can be handed over to the target network.

Furthermore, when the packet service of the source network is unable to be handed over to the target network, and after the user equipment context release complete message or release access bearer response message is received, the resource suspension process may be triggered.

Manner 3: The eNodeB sends the UE context release request (UE Context Release Request) to the MME of the source network. The MME of the source network starts the timer according to the message, and within the predetermined time of the timer, determines whether at least one of the following messages is received. When the MME of the source network determines that any one of the following messages is received within the predetermined time of the timer, the MME stops timing of the timer; when the MME of the source network determines that none of the following messages is received, the timer is timed out, that is, within the allowed time range of the timer, the context of the UE is not handed over to the target network. That is, within the allowed time range of the timer, the packet service of the source network is not handed over to the target network. In this way, a resource suspension process is triggered.

The messages include: a context request message (Context Request) sent by the SGSN of the target network and a context acknowledgement message (Context Ack) sent by the SGSN of the target network.

In manner 3, after the UE is handed over to the target network, if the target network supports the DTM, the UE may initiate the RAU process while performing a voice service in the target network, so that a related packet service can be handed over from the source network to the target network.

A specific procedure may be: The SGSN of the target network sends a context request message (Context Request) to the MME, which is used to request the context of the UE from the MME, and then the MME sends the context of the UE to the SGSN of the network according to the request. After receiving the context of the UE, the SGSN sends a context acknowledgement message (Context Ack) to the MME of the source network, which is used to acknowledge that the context of the UE transferred by the MME has been received. According to the context of the UE, the SGSN of the target network initiates an update process to a gateway (S-GW or P-GW), and then a UE-related packet service may be handed over from the source network to the target network. After receiving the context request message or context acknowledgement message sent by the SGSN of the target network, the MME may stop the timer.

However, after the UE is handed over to the target network, if the target network does not support the DTM, the UE may not initiate the RAU process while performing the voice service in the target network. Therefore, within the predetermined time of the timer, the MME may not receive the context request message or context acknowledgement message sent by the SGSN of the target network. Then, the timer is timed out, that is, within the allowed time range of the timer, the context of the UE is not handed over to the target network. That is, within the allowed time range of the timer, the packet service of the source network is not handed over to the target network. In this way, the resource suspension process is triggered.

Manner 4: The eNodeB sends the UE context release request (UE Context Release Request) to the MME of the source network. The MME of the source network executes an S1 connection release (S1 release) operation, receives a user equipment context release complete message (UE Context Release Complete) sent by the eNodeB or receives a release access bearer response message (Release Access Bearers Response) sent by the S-GW of the target network. The MME of the source network starts the timer, and within the predetermined time of the timer, determines whether at least one of the following messages is received.

When the MME of the source network determines that any one of the following messages is received within the predetermined time of the timer, the MME stops timing of the timer; when the MME of the source network determines that none of the following messages is received, the timer is timed out, that is, within the allowed time range of the timer, the context of the UE is not handed over to the target network. That is, within the allowed time range of the timer, the packet service of the source network is not handed over to the target network. In this way, the resource suspension process is triggered.

The messages include: a context request message (Context Request) sent by the SGSN of the target network and a context acknowledgement message (Context Ack) sent by the SGSN of the target network. The specific case is the same as that in the foregoing manner 3.

The processing manner of step 24 to step 27 is the same as that of step 15 to step 18 in Embodiment 2.

It can be seen through Embodiment 3 that, in this embodiment, when the eNodeB is incapable of triggering the PS HO process and the UE is handed over to the target network in other manners, the MME of the source network may trigger the resource suspension process through different forms, and subsequently the user equipment is set to the suspended state in the source network. Therefore, compared with Embodiment 3, the method of Embodiment 3 of the present invention is more oriented for the resource suspension processing.

Embodiment 4 of the present invention further provides a method for implementing resource suspension. An MME of a source network receives a handover request message sent by an eNodeB, in which the handover request message includes single radio voice call continuity indication information (SRVCC HO Indification); then according to the single radio voice call continuity indication information included in the handover request message, executes an operation of handing over a voice-related packet service of the user equipment to a target network; and if a voice-unrelated packet service of the user equipment is unable to be handed over to the target network, sets the user equipment to a suspended state in the source network, and otherwise, executes a corresponding handover operation.

It can be seen that, when the voice-unrelated packet service of the user equipment in the source network is handed over to the target network, the user equipment is set to the suspended state. When being paged occurs, since the corresponding user equipment has been in the suspended state, downlink paging is not triggered for the user equipment, thereby avoiding enormous paging generated in a case that the user equipment is unreachable in the prior art, so as to save system resources.

The method for implementing resource suspension in an SRVCC technology is described below with reference to Embodiment 5 and Embodiment 6. Definitely, it can be understood that, the method according to the embodiment of the present invention is not limited to scenarios listed herein.

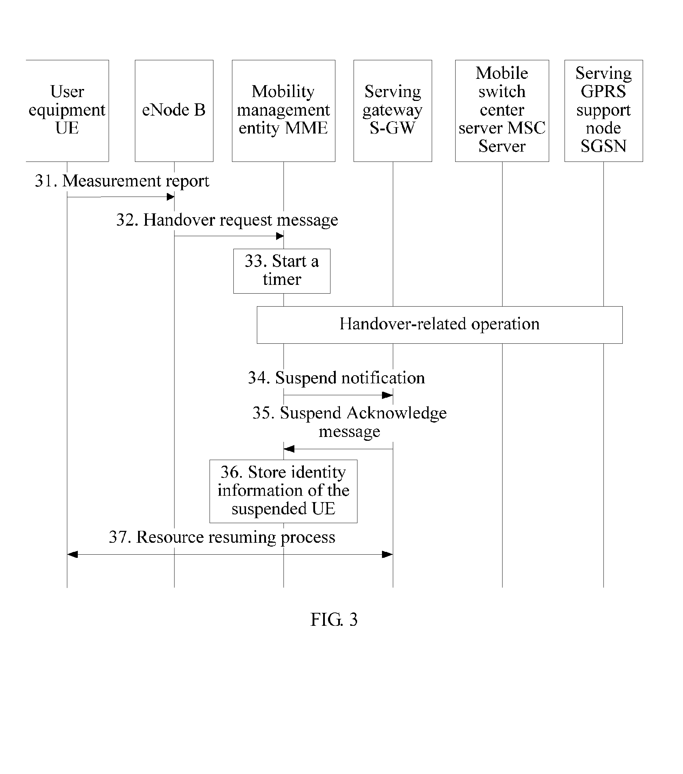

As shown in FIG. 3, a method for implementing resource suspension according to Embodiment 5 of the present invention includes the following steps.

Step 31: A UE sends a measurement report to an eNodeB. The eNodeB may decide to trigger an SRVCC handover process according to the measurement report.

Step 32: The eNodeB sends a (Handover Request) to an MME of a source network which carries SRVCC handover indication information (SRVCC HO Indification) indicating that the MME of the source network executes an SRVCC process.

Through the SRVCC handover indication information (SRVCC HO Indification), the MME of the source network learns that the SRVCC handover process is to be executed, and hands over a voice-related packet service in the source network to a circuit domain of a target network. The UE also returns to the GERAN/UTRAN network, that is, the UE needs to perform a network handover operation.

Step 33: The MME of the source network receives the (Handover Request), and if the message carries the SRVCC handover indication information (SRVCC HO Indification), the MME starts a timer, and executes a related operation according to the following several manners.
1) When what the SRVCC handover indication information (SRVCC HO Indification) indicates is "PS and CS", that is, when the voice-related packet service in the source network is handed over to the circuit domain of the target network and a voice-unrelated packet service is handed over to the packet domain of the target network, the UE may be handed over from the source network to the target network, and meanwhile the voice-unrelated packet service of the source network may be handed over to the packet domain of the target network. In this case, the MME may stop timing of the timer.

A specific procedure may be: An SGSN of the target network obtains a context of the UE through the MME of the source network, where the context of the UE includes a UE-related packet service information. According to the context of the UE, the SGSN of the target network initiates an update process to a gateway (S-GW or P-GW), and then the UE-related packet service may be handed over from the source network to the target network. Additionally, in this procedure, the SGSN of the target network sends a forward relocation response (Forward Relocation Response) message to acknowledge that in a preparation phase (Preparation phase) of an entire handover process, the context of the UE has been received from the MME, and then the SGSN of the target network sends a forward relocation complete notification (Forward Relocation Complete Notification) message to acknowledge that in an execution phase (Execution phase) of the entire handover process, the handover has been successfully completed. After receiving the forward relocation response or forward relocation complete notification message sent by the SGSN of the target network, the MME may stop the timer.
2) When what the SRVCC handover indication information (SRVCC HO Indification) indicates is "CS Only" (only available in the circuit domain), only the voice-related packet service in the source network can be handed over to the circuit domain of the target network, while the voice-unrelated packet service is unable to be handed over to the packet domain of the target network. The UE may return to the target network from the source network, and hand over the voice-related packet service to the circuit domain of the target network.

If the target network supports the DTM, the UE may initiate the RAU process while performing a voice service in the target network, so that a related packet service may be handed over from the source network to the target network.

A specific procedure may be: The SGSN of the target network sends a context request message (Context Request) to the MME, which is used to request the context of the UE from the MME, and then the MME sends the context of the UE to the SGSN of the network according to the request. After the SGSN receives the context of the UE, the SGSN sends a context acknowledgement message (Context Ack) to the MME of the source network, which is used to acknowledge that the context of the UE transferred by the MME has been received. According to the context of the UE, the SGSN of the target network initiates an update process to a gateway (S-GW or P-GW), and then the UE-related packet service may be handed over from the source network to the target network.

After receiving the context request message or context acknowledgement message sent by the SGSN of the target network, the MME may stop the timer.
3) When what the SRVCC handover indication information (SRVCC HO Indification) indicates is "CS Only" (only available in the circuit domain), only the voice-related packet service in the source network can be handed over to the circuit domain of the target network, while the voice-unrelated packet service is unable to be handed over to the packet domain of the target network. The reason why the SRVCC handover indication information is set to "CS only" may be that the target network does not support a PS HO manner or does not support a DTM, and definitely some other reasons are not excluded. The UE may return to the target network from the source network, and hand over the voice-related packet service to the circuit domain of the target network. If the target network does not support the DTM, the UE may not initiate an RAU process while performing the voice service in the target network. Therefore, within the predetermined time of the timer, the MME may not receive any one of the messages sent by the SGSN of the target network in the foregoing case 1) and case 2), that is, within the predetermined time of the timer, the MME may not receive any one of the messages sent by the SGSN of the target network. Then, when the timer is timed out, a resource suspension process is triggered.

Step 34 to step 37 are the same as step 15 to step 18 in Embodiment 2.

In Embodiment 5 of the present invention, for the SRVCC technology, the MME receives the access request message (Handover Request), and if the message carries the SRVCC handover indication information (SRVCC HO Indification), the MME starts the timer. Therefore, by use of the method according to Embodiment 5 of the present invention, a user equipment incapable of handing over a voice-unrelated packet service to a target network can be correctly set to a suspended state, thereby not only improving the correctness of a suspension operation but also saving system resources.

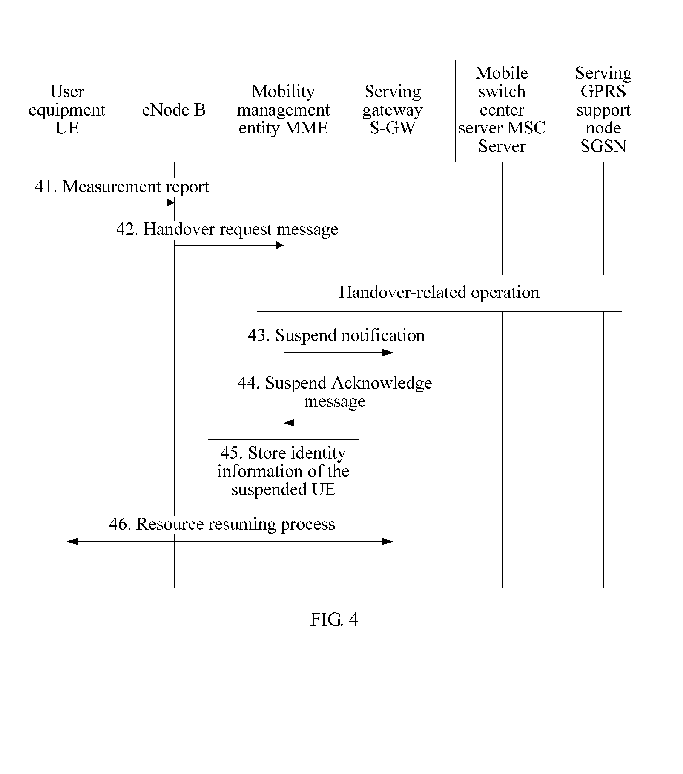

As shown in FIG. 4, a method for implementing resource suspension according to Embodiment 6 of the present invention includes the following steps.

Step 41: Be the same as step 31.

Step 42: An eNodeB sends a Handover Request message to an MME of a source network, in which the message carries SRVCC handover indication information (SRVCC HO Indification) indicating that the MME of the source network executes an SRVCC process. Furthermore, what the SRVCC handover indication information indicates is "CS only" (only available in a circuit domain). The reason why the SRVCC handover indication information is set to "CS only" may be that a target network does not support a PS HO manner or does not support a DTM, and definitely some other reasons are not excluded. When a value of the SRVCC handover indication information is only available in a circuit domain (CS Only), that is to say, only a voice-related packet service in the source network can be handed over to the circuit domain of the target network, while a voice-unrelated packet service is unable to be handed over to the packet domain of the target network.

The MME of the source network executes the following several operations.
1) When handover indication information in a handover request message is only available in the circuit domain (CS only), a resource suspension process is triggered.
2) When the handover indication information in the handover request message is only available in the circuit domain (CS only), the MME of the source network starts a timer. The timer is used to trigger initiation of a suspension process between an MME and an S-GW. For example, the timer is timed out, and a suspension process is initiated between the MME and the S-GW. Within the predetermined time, the MME of the source network judges whether at least one of the following messages is received. When it is determined that at least one of the following messages is received, the MME may stop the timer; if none of the following messages is received, when the timer is timed out, the resource suspension process is triggered.

The messages include: a context request message (Context Request) sent by an SGSN of the target network and a context acknowledgement message (Context Ack) sent by the SGSN of the target network.

A specific procedure is as follows: The eNodeB initiates an SRVCC process, what the SRVCC handover indication information indicates is "CS only", and the UE returns to the target network from the source network, and hands over the voice-related packet service to the circuit domain of the target network. If the target network supports a DTM, the UE may initiate an RAU process while performing a voice service in the target network, so that a related packet service may be moved from the source network to the target network.

A specific procedure may be: The SGSN of the target network sends a context request message (Context Request) to the MME, which is used to request a context of the UE from the MME, and then the MME sends the context of the UE to the SGSN of the network according to the request. After the SGSN receives the context of the UE, the SGSN sends a context acknowledgement message (Context Ack) to the MME of the source network, which is used to acknowledge that the context of the UE transferred by the MME has been received. According to the context of the UE, the SGSN of the target network initiates an update process to a gateway (S-GW or P-GW), and then a UE-related packet service may be handed over from the source network to the target network. After receiving the context request message or context acknowledgement message sent by the SGSN of the target network, the MME may stop the timer.

If the target network does not support the DTM, the UE may not initiate the RAU process while performing the voice service in the target network. Therefore, within the predetermined time of the timer, the MME may not receive the message sent by the SGSN of the target network, that is, within the predetermined time of the timer, the MME may not receive any one of the context request message or context acknowledgement message sent by the SGSN of the target network. Then, when the timer is timed out, the resource suspension process is triggered.
3) When handover indication information in an access request message is only available in the circuit domain (CS only), the MME of the source network initiates an SRVCC HO-related process; in the process, the MME may receive an SRVCC PS to CS Rsponse (single radio voice call continuity packet domain to circuit domain response) message sent by an MSC Server (Mobile Switch Center Server, handover switch center server), and a resource suspension process is triggered.
4) When the handover indication information in the access request message is only available in the circuit domain (CS only), the MME of the source network initiates an SRVCC HO-related process; in the process, the MME may receive an SRVCC PS to CS Response message sent by the MSC Server, and the timer is started. The timer is used to trigger initiation of a suspension process between an MME and an S-GW. For example, the timer is timed out, and a suspension process is initiated between the MME and the S-GW. Within the predetermined time, the MME of the source network judges whether at least one of the following messages is received. When it is determined that at least one of the following messages is received, the MME may stop the timer; if none of the following messages is received, when the timer is timed out, the resource suspension process is triggered.

The messages include: a context request message (Context Request) sent by the SGSN of the target network; and a context acknowledgement message (Context Ack) sent by the SGSN of the target network.

The specific case is the same as the description in the foregoing case 2).

Step 43 to step 46 are the same as step 15 to step 18 in Embodiment 2.

It can be seen through Embodiment 6 that, in this embodiment, when what the SRVCC handover indication information indicates is "CS only", the MME of the source network may trigger the resource suspension process through different forms, and subsequently, the user equipment is set to the suspended state in the source network. Therefore, compared with Embodiment 6, the method of Embodiment 4 of the present invention is more oriented for resource suspension.

Persons of ordinary skill in the art should understand that all or a part of the processes of the method according to the embodiments of the present invention may be implemented by a program instructing relevant hardware. The program may be stored in a computer readable storage medium. When the program runs, the processes of the method according to the embodiments of the present invention may be executed. The storage medium may be a magnetic disk, an optical disk, a read-only memory (Read-Only Memory, ROM) or a random access memory (Random Access Memory, RAM).

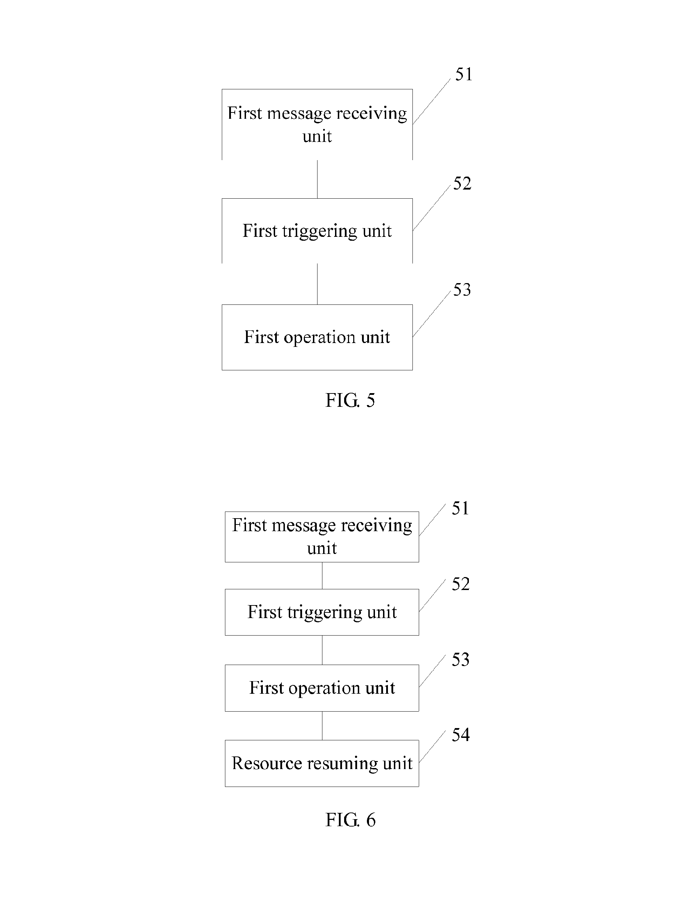

Moreover, as shown in FIG. 5, Embodiment 7 of the present invention further provides an apparatus for implementing resource suspension, which includes: a first message receiving unit 51, configured to receive a service request message sent by an eNodeB, in which the service request message includes circuit domain service fallback conventional network indication information; a first triggering unit 52, configured to trigger, according to the circuit domain service fallback conventional network indication information included in the service request message, an operation of enabling a user equipment to return to a target network to perform a voice service; and a first operation unit 53, configured to, if a packet service of the user equipment in a source network is unable to be handed over to the target network, set the user equipment to a suspended state in the source network.

Same as the description in the method embodiments, the source network mainly refers to an E-UTRAN network, and the target network mainly refers to a GERAN/UTRAN network. In different application scenarios, manners of determining whether the packet service of the source network can be handed over to the target network are different, and correspondingly, components of the first operation unit are different.

Situation 1: For example, in the CSFB technology, the first operation unit 53 may include:
a first timing control module, configured to start a timer after the service request message is received; a first judging module, configured to, within the predetermined time of the timer, if none of the following messages is received, judge that the packet service of the user equipment in the source network is unable to be handed over to the target network; and a first operation module, configured to, if the packet service of the user equipment in the source network is unable to be handed over to the target network, set the user equipment to the suspended state in the source network.

The messages include: a context request message sent by an SGSN of the target network; a context acknowledgement message sent by the SGSN of the target network; a forward relocation response message sent by the SGSN of the target network; and a forward relocation complete notification message sent by the SGSN of the target network. The messages include: a context request message sent by the SGSN of the target network; a context acknowledgement message sent by the SGSN of the target network; a forward relocation response message sent by the SGSN of the target network; and a forward relocation complete notification message sent by the SGSN of the target network.

Furthermore, in order to further save resources, the first timing control module is further configured to stop the timer when the packet service of the user equipment in the source network can be handed over to the target network.

Moreover, on the basis of FIG. 5, as shown in FIG. 6, the apparatus for implementing resource suspension may further include: a message sending unit 54, configured to send a request message of an S1 interface to the eNodeB. The concept of the request message of the S1 interface is the same as that in the method embodiment.

On the basis of the description, the first operation unit 53 may have the following several forms.

Situation 2: in the CSFB technology, the first operation unit 53 may include: a second message receiving module, configured to receive a user equipment release context request message sent by the eNodeB; a second judging module, configured to, when the message carries information indicating that the packet service is not available, judge that the packet service of the source network is unable to be handed over to the target network; and a second operation module, configured to, if the packet service of the user equipment in the source network is unable to be handed over to the target network, set the user equipment to the suspended state in the source network.

Situation 3: in the CSFB technology, the first operation unit 53 may include:
a third message receiving module, configured to receive a user equipment release context request message sent by the eNodeB; a third timing control module, configured to start a timer according to the user equipment release context message; a third judging module, configured to, within the predetermined time of the timer, if none of the following messages is received, judge that the packet service of the user equipment in the source network is unable to be handed over to the target network; and a third operation module, configured to, if the packet service of the user equipment in the source network is unable to be handed over to the target network, set the user equipment to the suspended state in the source network.

The messages include: a context request message sent by a serving GPRS support node of the target network and a context acknowledgement message sent by the serving GPRS support node of the target network.

Likewise, in order to further save resources, the third timing control module is further configured to stop the timer when the packet service of the user equipment in the source network can be handed over to the target network.

In the foregoing situation 2 and situation 3, the message receiving unit 51 is further configured to receive a user equipment context release complete message sent by the eNodeB and receive a release access bearer response message sent by the SGSN of the target network, and trigger the first operation unit to execute a resource suspension operation after receiving the user equipment context release request message or the user equipment context release complete message or receiving the release access bearer response message sent by the SGSN of the target network.

Moreover, as shown in FIG. 6, the apparatus according to the embodiment of the present invention may further include: a resource resuming unit 54, configured to, when a state of the user equipment in the source network is the suspended state, and the user equipment returns to the source network, resume the packet service of the user equipment.

It can be seen from the above that, with the apparatus according to Embodiment 7 of the present invention, if the packet service of the user equipment in the source network is unable to be handed over to the target network, the user equipment is set to the suspended state. When called paging occurs, since a corresponding user equipment has been in the suspended state, downlink paging is not triggered for the user equipment, thereby avoiding enormous paging generated in a case that the user equipment is unreachable in the prior art, so as to save system resources.

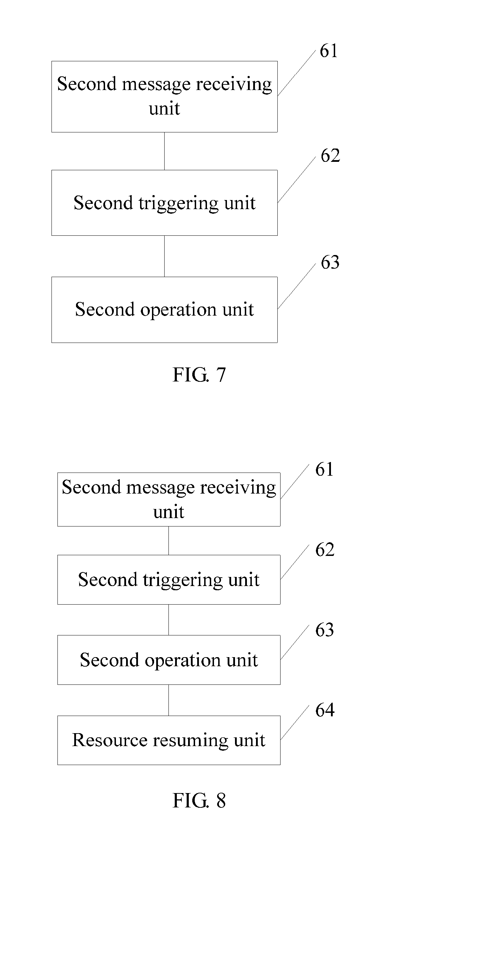

Moreover, Embodiment 8 of the present invention further provides an apparatus for implementing resource suspension, as shown in FIG. 7, which includes: a second message receiving unit 61, configured to receive a handover request message sent by an eNodeB, in which the handover request message includes single radio voice call continuity indication information; a second triggering unit 62, configured to execute, according to the single radio voice call continuity indication information included in the handover request message, an operation of handing over a voice-related packet service of a user equipment to a target network; and a second operation unit 63, configured to, if a voice-unrelated packet service of the user equipment is unable to be handed over to the target network, set the user equipment to a suspended state in a source network.

Same as the description in the method embodiments, the source network mainly refers to an E-UTRAN network, and the target network mainly refers to a GERAN/UTRAN network. In different application scenarios, manners of determining whether the packet service of the source network can be handed over to the target network are different, and correspondingly, components of the operation unit are different.

Situation 1: in the SRVCC technology, the second operation unit 61 includes: a fourth message parsing module, configured to parse the handover request message; a fourth judging module, configured to, when the single radio voice call continuity indication information in the handover request message is available in a circuit domain, judge that the voice-unrelated packet service of the user equipment is unable to be handed over to the target network; and a fourth operation module, configured to, if the voice-unrelated packet service of the user equipment is unable to be handed over to the target network, set the user equipment to the suspended state in the source network.

Situation 2: in the SRVCC technology, the second operation unit 61 may include: a fifth timing control module, configured to start a timer when the single radio voice call continuity indication information in the handover request message is available in a circuit domain; a fifth judging module, configured to, within the predetermined time of the timer, if none of the following messages is received, judge that the voice-unrelated packet service of the user equipment is handed over to the target network; and a fifth operation module, configured to, if the packet service of the user equipment in the source network is unable to be handed over to the target network, set the user equipment to the suspended state in the source network.

The messages include: a context request message sent by a serving GPRS support node of the target network and a context acknowledgement message sent by the serving GPRS support node of the target network.

Furthermore, in order to further save resources, the fifth timing control module is further configured to stop the timer when the packet service of the user equipment in the source network can be handed over to the target network.

In situation 1 and situation 2, the second message receiving unit 61 is further configured to, in a process of executing single radio voice call continuity, receive a single radio voice call continuity packet domain to circuit domain response message sent by a mobile switch center server of the source network. The second operation unit is specifically configured to, when the voice-unrelated packet service of the user equipment is unable to be handed over to the target network, and the single radio voice call continuity packet domain to circuit domain response message is received, set the user equipment to the suspended state in the source network.

Moreover, as shown in FIG. 8, the apparatus according to the embodiment of the present invention can further include: a resource resuming unit 64, configured to, when a state of the user equipment in the source network is the suspended state, and the user equipment returns to the source network, resume the packet service of the user equipment.

The apparatus for implementing resource suspension according to the foregoing embodiment may be located in an MME of the source network.

It can be seen from the above that, with the apparatus for implementing resource suspension according to Embodiment 8 of the present invention, if the voice-unrelated packet service of the user equipment in the source network is handed over to the target network, the user equipment is set to the suspended state. When being paged occurs, since a corresponding user equipment has been in the suspended state, downlink paging is not triggered for the user equipment, thereby avoiding enormous paging generated in a case that the user equipment is unreachable in the prior art, so as to save system resources.

Further, the apparatus for implementing resource suspension according to Embodiment 7 or Embodiment 8 of the present invention may be further used to form a system for implementing resource suspension.

The working procedure of the foregoing system may be performed with reference to the description in the method embodiments of the present invention.

To sum up, with the method, the apparatus and the system for implementing resource suspension according to the embodiments of the present invention, when a packet service of a user equipment in a source network is unable to be handed over to a target network or a voice-unrelated packet service is handed over to the target network, the user equipment is set to a suspended state. When being paged occurs, since a corresponding user equipment has been in the suspended state, downlink paging is not triggered for the user equipment, thereby avoiding enormous paging generated in a case that the user equipment is unreachable in the prior art, so as to save system resources.

The above is only the specific implementation of the present invention, but the protection scope of the present invention is not limited thereto. Any change or replacement that can be easily figured out by persons skilled in the art within the technical scope disclosed by the present invention shall be covered by the protection scope of the present invention. Therefore, the protection scope of the present invention is subject to the appended claims.

## Claims

1. A method for implementing resource suspension, comprising:
receiving a service request message sent by an evolved universal mobile telecommunications system territorial radio access network node eNodeB, wherein the service request message comprises circuit domain service fallback conventional network indication information;
according to the circuit domain service fallback conventional network indication information comprised in the service request message, triggering an operation of enabling a user equipment to return to a target network to perform a voice service; and
if a packet service of the user equipment in a source network is unable to be handed over to the target network, setting the user equipment to a suspended state in the source network.

2. The method according to claim 1, wherein the packet service of the user equipment in the source network being unable to be handed over to the target network comprises:
after receiving the service request message, starting a timer, and within predetermined time of the timer, if none of the following messages is received, indicating that the packet service of the user equipment in the source network is unable to be handed over to the target network,
wherein the messages comprise:
a context request message sent by a serving GPRS support node of the target network; a context acknowledgement message sent by the serving GPRS support node of the target network; and a forward relocation response message sent by the serving GPRS support node of the target network and a forward relocation complete notification message sent by the serving GPRS support node of the target network.

3. The method according to claim 1, wherein the packet service of the user equipment in the source network being unable to be handed over to the target network comprises:
sending a request message of an S1 interface to the eNodeB; and receiving a user equipment release context request message sent by the eNodeB, wherein if the message carries information indicating that the packet service is not available, the packet service of the source network is unable to be handed over to the target network; or
sending a request message of an S1 interface to the eNodeB, receiving a user equipment release context request message sent by the eNodeB, starting a timer according to the user equipment release context message, and within predetermined time of the timer, if none of the following messages is received, indicating that the packet service of the user equipment in the source network is unable to be handed over to the target network,
wherein the messages comprise: a context request message sent by a serving GPRS support node of the target network and a context acknowledgement message sent by the serving GPRS support node of the target network.

4. The method according to claim 3, wherein after receiving the user equipment release context request message sent by the eNodeB, the method further comprises:
executing an S1 connection release operation, and receiving a user equipment context release complete message sent by the eNodeB; or receiving a release access bearer response message sent by the serving GPRS support node of the target network.

5. The method according to claim 4, wherein, if the packet service of the user equipment in the source network is unable to be handed over to the target network, the setting the user equipment to the suspended state in the source network comprises:
when the packet service of the source network is unable to be handed over to the target network, and the user equipment context release request message or the user equipment context release complete message or the release access bearer response message is received, setting the user equipment to the suspended state in the source network.

6. The method according to claim 3, wherein if the packet service of the user equipment in the source network can be handed over to the target network, the method further comprises:
stopping the timer.

7. The method according to claim 1, further comprising:
when a state of the user equipment in the source network is the suspended state, and the user equipment returns to the source network, resuming the packet service of the user equipment.

8. A method for implementing resource suspension, comprising:
receiving a handover request message sent by an eNodeB, wherein the handover request message comprises single radio voice call continuity indication information;
according to the single radio voice call continuity indication information comprised in the handover request message, executing an operation of handing over a voice-related packet service of the user equipment to a target network; and
if a voice-unrelated packet service of the user equipment is unable to be handed over to the target network, setting the user equipment to a suspended state in a source network.

9. The method according to claim 8, wherein the voice-unrelated packet service of the user equipment being unable to be handed over to the target network comprises:
when the single radio voice call continuity indication information in the handover request message indicates being available in a circuit domain, the voice-unrelated packet service of the user equipment being unable to be handed over to the target network; or
when the single radio voice call continuity indication information in the handover request message indicates being available in a circuit domain, starting a timer, and within predetermined time of the timer, if none of the following messages is received, the voice-unrelated packet service of the user equipment being unable to be handed over to the target network, wherein the messages comprise: a context request message sent by a serving GPRS support node of the target network and a context acknowledgement message sent by the serving GPRS support node of the target network.

10. The method according to claim 9, further comprising:
when the process of single radio voice call continuity is being executed, receiving a single radio voice call continuity packet domain to circuit domain response message sent by a mobile switch center server of the source network; and
if the voice-unrelated packet service of the user equipment is unable to be handed over to the target network, the setting the user equipment to the suspended state in the source network comprises:
when the voice-unrelated packet service of the user equipment is unable to be handed over to the target network, and the single radio voice call continuity packet domain to circuit domain response message is received, setting the user equipment to the suspended state in the source network.

11. The method according to claim 9, wherein when the voice-unrelated packet service of the user equipment can be handed over to the target network, the method further comprises:
stopping the timer.

12. The method according to claim 8, further comprising:
when a state of the user equipment in the source network is the suspended state, and the user equipment returns to the source network, resuming the packet service of the user equipment.

13. An apparatus for implementing resource suspension, comprising:
a first message receiving unit, configured to receive a service request message sent by an evolved universal mobile telecommunications system territorial radio access network node eNodeB, wherein the service request message comprises circuit domain service fallback conventional network indication information;
a first triggering unit, configured to trigger, according to the circuit domain service fallback conventional network indication information comprised in the service request message, an operation of enabling a user equipment to return to a target network to perform a voice service; and
a first operation unit, configured to, if a packet service of the user equipment in a source network is unable to be handed over to the target network, set the user equipment to a suspended state in the source network.

14. The apparatus according to claim 13, wherein the first operation unit comprises:
a first timing control module, configured to start a timer after the service request message is received;
a first judging module, configured to, within predetermined time of the timer, if none of following messages is received, judge that the packet service of the user equipment in the source network is unable to be handed over to the target network; and
a first operation module, configured to, if the packet service of the user equipment in the source network is unable to be handed over to the target network, set the user equipment to the suspended state in the source network,
wherein, the messages comprise:
a context request message sent by a serving GPRS support node of the target network; a context acknowledgement message sent by the serving GPRS support node of the target network; and a forward relocation response message sent by the serving GPRS support node of the target network; and a forward relocation complete notification message sent by the serving GPRS support node of the target network.

15. The apparatus according to claim 13, further comprising:
a message sending unit, configured to send a request message of an S1 interface to the eNodeB; and
the first operation unit comprises:
a second message receiving module, configured to receive a user equipment release context request message sent by the eNodeB; a second judging module, configured to, when the message carries information indicating that the packet service is not available, judge that the packet service of the source network is unable to be handed over to the target network; and a second operation module, configured to, if the packet service of the user equipment in the source network is unable to be handed over to the target network, set the user equipment to the suspended state in the source network; or
the first operation unit comprises:
a third message receiving module, configured to receive a user equipment release context request message sent by the eNodeB; a third timing control module, configured to start a timer according to the user equipment release context message; a third judging module, configured to, within predetermined time of the timer, if none of the following messages is received, judge that the packet service of the user equipment in the source network is unable to be handed over to the target network; and a third operation module, configured to, if the packet service of the user equipment in the source network is unable to be handed over to the target network, set the user equipment to the suspended state in the source network, wherein the messages comprise: a context request message sent by a serving GPRS support node of the target network and a context acknowledgement message sent by the serving GPRS support node of the target network.

16. The apparatus according to claim 15, wherein the first operation unit is further configured to execute an S1 connection release operation; and the first message receiving unit is further configured to receive a user equipment context release complete message sent by the eNodeB or receive a release access bearer response message sent by the serving GPRS support node of the target network.

17. The apparatus according to claim 14 or 15, wherein the first timing control module and the third timing control module are further configured to stop the timer when the packet service of the user equipment in the source network can be handed over to the target network.

18. The apparatus according to claim 16, wherein the first operation unit is specifically configured to, when the user equipment context release request message or the user equipment context release complete message or the release access bearer response message is received, set the user equipment to the suspended state in the source network.

19. The apparatus according to claim 13, further comprising:
a resource resuming unit, configured to, when a state of the user equipment in the source network is the suspended state, and the user equipment returns to the source network, resume the packet service of the user equipment.

20. An apparatus for implementing resource suspension, comprising:
a second message receiving unit, configured to receive a handover request message sent by an eNodeB, wherein the handover request message comprises single radio voice call continuity indication information;
a second triggering unit, configured to execute, according to the single radio voice call continuity indication information comprised in the handover request message, an operation of handing over a voice-related packet service of a user equipment to a target network; and
a second operation unit, configured to, if a voice-unrelated packet service of the user equipment is unable to be handed over to the target network, set the user equipment to a suspended state in a source network.

21. The apparatus according to claim 20, wherein the operation unit comprises:
a fourth message parsing module, configured to parse the handover request message;
a fourth judging module, configured to, when the single radio voice call continuity indication information in the handover request message indicates being available in a circuit domain, judge that the voice-unrelated packet service of the user equipment is unable to be handed over to the target network; and
a fourth operation module, configured to, if the voice-unrelated packet service of the user equipment is unable to be handed over to the target network, set the user equipment to the suspended state in the source network.

22. The apparatus according to claim 20, wherein the operation unit comprises:
a fifth timing control module, configured to start a timer when the single radio voice call continuity indication information in the handover request message indicates being available in a circuit domain;
a fifth judging module, configured to, within predetermined time of the timer, if none of the following messages is received, judge that the voice-unrelated packet service of the user equipment is handed over to the target network; and
a fifth operation module, configured to, if the packet service of the user equipment in the source network is unable to be handed over to the target network, set the user equipment to the suspended state in the source network,
wherein, the messages comprise: a context request message sent by a serving GPRS support node of the target network and a context acknowledgement message sent by the serving GPRS support node of the target network.

23. The apparatus according to claim 21 or 22, wherein the second message receiving unit is further configured to, when the process of single radio voice call continuity is being executed, receive a single radio voice call continuity packet domain to circuit domain response message sent by a mobile switch center server of the source network; and
the second operation unit is configured to, when the voice-unrelated packet service of the user equipment is unable to be handed over to the target network, and the single radio voice call continuity packet domain to circuit domain response message is received, set the user equipment to the suspended state in the source network.

24. The apparatus according to claim 22, wherein the fifth timing control module is further configured to stop the timer when the voice-unrelated packet service of the user equipment is handed over to the target network.

25. The apparatus according to claim 20, further comprising:
a resource resuming unit, configured to, when a state of the user equipment in the source network is the suspended state, and the user equipment returns to the source network, resume the packet service of the user equipment.

26. A system for implementing resource suspension, comprising:
the apparatus for implementing resource suspension according to any one of claims 13 to 25.
